# EUROPÄISCHE PATENTSCHRIFT

(11) **EP 0 874 184 B1**
(45) Veröffentlichungstag und Bekanntmachung des Hinweises auf die Patenterteilung: **04.06.2003**
(21) Anmeldenummer: 98106659.0
(22) Anmeldetag: 11.04.1998
(51) Int. Cl.: F16L 33/207

(54) **Anschlussnippel sowie Kunststoffschlauch, insbesondere Brauseschlauch, hierzu**
Connecting nipple and plastic hose, in particular shower hose, hereto
Raccord de connexion ainsi que tuyau souple, notamment tuyau de douche, pour ce raccord

(30) Priorität: 25.04.1997 DE 19717426
(43) Veröffentlichungstag der Anmeldung: 28.10.1998
(73) Patentinhaber: Hansgrohe AG, 77761 Schiltach (DE)
(72) Erfinder: Alkaltan, Zafer, 77761 Schiltach (DE)
(74) Vertreter: Patentanwälte Ruff, Wilhelm, Beier, Dauster & Partner

(56) Entgegenhaltungen:
- EP-A- 0 589 413
- CH-A- 218 441
- DE-A- 3 120 895
- DE-A- 4 430 114
- DE-U- 9 004 342

## Beschreibung

Die Erfindung betrifft einen Anschlussnippel mit den Merkmalen des Oberbegriffs des Anspruchs 1 sowie einen Kunststoffschlauch hierzu.

Ein Kunststoffschlauch mit einem derartig ausgebildeten Anschlussnippel ist aus der DE 31 20 895 C2 bekannt. Trotz der vorteilhaften Ausführung ergeben sich in der Praxis bei mehrlagigen Kunststoffschläuchen mit Verstärkungswendel Probleme mit der Befestigung und insbesondere Abdichtung von Anschlussnippeln, was unter anderem darauf zurückzuführen ist, dass der Anpressdruck des Innenschlauches auf dem Anschlussnippel infolge der Verstärkungswendel ungleichmäßig ist.

Aus der EP 589 413 A1 ist es bekannt, in einen rundzylindrischen Abschnitt eines Anschlussnippels sägezahnartige, quer umlaufende Rillen einzuschneiden. Diese dienen zum Festhalten des darübergeschobenen Schlauches.

Der Erfindung liegt die Aufgabe zugrunde, einen Anschlussnippel mit verbessertem Anschluss an einen Kunststoffschlauch zu schaffen, der im Aufbau einfach ist und den Anforderungen in der Praxis genügt.

Die Erfindung wird gelöst durch einen Anschlussnippel mit den Merkmalen des Anspruchs 1.

Durch die Vielzahl der Rillen wird nicht nur die Kontaktfläche zwischen Anschlussnippel und Schlauchende vergrößert; es werden auch zusätzliche mechanische Verankerungsmöglichkeiten zwischen Anschlußnippel und Schlauchende geschaffen, wodurch die mechanische Festigkeit und die Dichtigkeit der Verbindung verbessert wird. Es liegt eine gegenseitige Überlagerung von Grobgewinde und feiner Verrillung vor.

Bei einer Ausführungsform der Erfindung ist der Außendurchmesser des Rohrabschnittes im jeweiligen Rillengrund unabhängig vom Grobgewinde bei den Rillen jeweils gleich groß. Dies bedeutet, dass die Rillen jeweils gleich tief in den Anschlussnippel eingeformt bzw. eingeschnitten sind. Dadurch sieht das Grobgewinde, das in Längsrichtung des Nippels insbesondere als flache Welle auf der Außenseite des Rohrstückes verläuft, so aus, als sei es den Rillen überlagert. Die Gewindetiefe des Grobgewindes ist geringer als die Tiefe der Rillen, so dass die Rillen auch noch an den Vertiefungsstellen des Grobgewindes vorhanden sind, wenn auch mit geringerer Rillentiefe.

Der Anschlussnippel kann, insbesondere bei einem Brauseschlauch, eine übliche Überwurfmutter aufweisen, die sich an einem Flansch des Anschlussnippels und/oder der Klemmhülse abstützt. Der Anschlussnippel kann aber auch in anderer Weise ausgebildet sein, zum Beispiel ein Anschlussgewinde tragen oder als Steckverbindung ausgebildet sein. Die Rillen sind vorzugsweise als umlaufende, in sich geschlossene Rillen ausgebildet und verlaufen insbesondere quer zur Längsrichtung des Nippels. Weiterhin ist die Rillenbreite klein im Verhältnis zur Ganghöhe des Grobgewindes.

Die Grate zwischen den Rillen können im Bereich der Wellenberge des Grobgewindes geringfügig abgeflacht sein. Zumindest im Bereich der Wellentäler des Grobgewindes ist eine starke Abflachung der Grate zwischen den Rillen vorhanden, die in Anpassung an den Verlauf des Grobgewindes auch schräg sein kann. Die Rillen sind im Längsschnitt des Nippels vorzugsweise im wesentlichen V-förmig ausgebildet, so dass sich die gegenüberliegenden Flanken der Rillen im Rillengrund treffen. Der Winkel zwischen gegenüberliegenden Flanken kann im Bereich von 50 - 110° liegen. Insbesondere liegt ein spitzer Winkel zwischen den Flanken vor. Die V-förmige Ausbildung kann symmetrisch sein nach Art eines gleichschenkligen Dreiecks. Es ist aber auch möglich, die V-förmige Ausbildung asymmetrisch bzw. schräg anzuordnen. Es kann so eine sägezahnartige Ausbildung erfolgen, wobei die Zahnspitzen entgegen der Einschubrichtung weisen.

Bei einer bevorzugten Ausführungsform der Erfindung ist der Rohrabschnitt des Nippels, abgesehen von einer etwaigen und bevorzugten Einführschräge, im wesentlichen zylindrisch ausgebildet. Dadurch kann zwischen der Klemmhülse und dem Rohrabschnitt ein im wesentlichen gleichmäßiger Anpressdruck auf das Schlauchende ausgeübt werden. Weiterhin wird durch die erfindungsgemäße Ausbildung der Verbindung zwischen dem Kunststoffschlauch und dem Anschlussnippel eine so gute Verbindung erreicht, dass der zur Verbindung dienende Rohrabschnitt des Anschlussnippels sehr kurz gehalten werden kann. Es reicht aus, wenn er etwa doppelt so gross ist wie der Innendurchmesser des Rohrabschnittes. Er ist bei bevorzugten Ausführungsformen sogar kürzer. So kann, insbesondere bei einem Brauseschlauch, der Innendurchmesser des Rohrabschnittes etwa 7,5 mm betragen. Die Länge des Rohrabschnittes, über den das Schlauchende geschoben ist, kann 14 mm betragen, wovon etwa 3 mm für eine Einführschräge vorgesehen sind. Auf den verbleibenden 11 mm können 11 Rillen vorgesehen sein, was einer Rillenbreite von 1 mm entspricht. Die Steigung der Verstärkungswendel liegt üblicherweise im Bereich von 5 - 7 mm. Dies bedeutet, daß ca. 5 - 7 Rillen pro Ganghöhe des Grobgewindes auf dem Rohrstück angeordnet sind.

Bei einer bevorzugten Ausführungsform der Erfindung weist die Innenseite des Innenschlauches im Bereich des Schlauchendes harte Rippen auf, die mit den Rillen des Nippels korrespondieren. So sind vorzugsweise etwaige Zwischenräume zwischen Schlauchinnenseite und Außenseite des Rohrstückes mit einem vorzugsweise harten Kleber ausgefüllt. Dabei ist ein solcher Kleber bevorzugt, der eine gute Haftung am Innenschlauch aufweist. Auf diese Weise sind auf der Innenseite des Innenschlauches den Rillen entsprechende Gegenrippen vorhanden, die eine gute formschlüssige Verbindung zwischen dem Innenschlauch und dem Anschlußnippel schaffen. Zusätzlich hat der Kleber vorzugsweise auch gute Bindungseigenschaften an das Material des Nippels, der insbesondere aus Metall, z.B. Messing, oder Kunststoff bestehen kann. Auf diese Weise wird zusätzlich zur formschlüssigen Verbindung eine dauerhafte Dichtigkeit erzielt. Durch die wellenförmige Überlagerung des Grobgewindes über die Rillen ist die Rillentiefe, wie oben erwähnt, im Bereich der Wellentäler des Grobgewindes, wo die Wendel zur Anlage kommt, geringer als im Bereich der Wellenberge des Grobgewindes. Dadurch ist dort, wo der Anpreßdruck zwischen Innenschlauch und Rohrstück geringer ist, nämlich zwischen den Gängen der Wendel, eine größere gegenseitige Verzahnung und größere Menge an Kleber vorhanden und dort, wo der Innenschlauch ohnehin durch die Wendel stark gegen das Rohrstück gepreßt wird und deshalb ohnehin eine gute Preßverbindung vorliegt, infolge der geringeren Tiefe weniger Klebstoff vorhanden. Zusätzlich kann der noch nicht ausgehärtete Kleber beim Einführen bzw. Eindrehen des Nippels in das Schlauchende eine Schmiermittelwirkung ausüben und das Eindrehen erleichtern.

Als Kleber eignen sich beispielsweise Einkomponenten-Kleber. Anstelle eines Klebers können auch Härtemittel verwendet werden, die das flexible Material des Innenschlauches hartmachen. Die in die Rillen eingepreßten Teile des Innenschlauches werden dadurch mechanisch starr und verkrallen sich in den Rillen.

Beim Einführen des Nippels in das Schlauchende und beim Aufpressen der Klemmhülse kann zusätzlich zum radialen Anpreßdruck auch noch ein axialer Stauchdruck ausgeübt werden. Durch die Ausübung dieser Kräfte kann der Innenschlauch zumindest teilweise in die Zwischenräume zwischen den Gängen der Wendel eingedrückt werden, so daß das Schlauchende, beispielsweise bei einem doppelwandigen Schlauch mit Wendel, im Bereich zwischen Rohrstück und Hülse im wesentlichen massiv ausgebildet ist und praktisch keine Hohlräume mehr vorhanden sind. Dies hat zur Folge, daß auch beim Dauergebrauch und Temperaturwechsel eine stabile Verbindung zwischen Anschlußnippel und Schlauchende vorliegt. Weist der Kunststoffschlauch zusätzlich zur Wendel, die vorwiegend eine Radialstabilisierung bringt, noch Längsverstärkungsfäden auf, dann verlaufen diese im Verbindungsbereich am Schlauchende durch die Ausgestaltung des Anschlußnippels vorzugsweise wellenförmig, was durch die Stauchung des Innenschlauches noch verstärkt wird. Dadurch erhalten auch die Längsverstärkungsfäden eine gute Verankerung im Verbindungsbereich, was sich vorteilhaft auf die Längsstabilität des Schlauches auswirkt.

Die freie Stirnseite des Nippels kann, wie oben erwähnt, als Rohrflansch ausgebildet sein oder einen entsprechenden Bund aufweisen. Bei dieser Ausführungsform ist an der dem Schlauch zugewandten Seite des Flansches bzw. Bundes vorzugsweise eine stufenförmig abgesetzte, ringförmige Schulter vorgesehen, deren Außendurchmesser im wesentlichen dem Innendurchmesser einer beispielsweise zylindrischen Klemmhülse entspricht. Bei dieser Ausführungsform kann das vordere Ende der Klemmhülse mit Vorteil auf die ringförmige Schulter aufgeschoben sein und sich auf dieser zentrieren, wodurch nicht nur ein gutes Aussehen der Verbindung, sondern auch eine weitere Verbesserung der Verbindung erzielt wird.

Die beschriebenen Merkmale und weitere Merkmale der Erfindung ergeben sich aus der nachfolgenden Beschreibung von bevorzugten Ausführungsformen in Verbindung mit den Unteransprüchen und der Zeichnung. Hierbei können die einzelnen Merkmale nach den Ansprüchen jeweils für sich oder zu mehreren in Kombination miteinander verwirklicht sein.

In den Zeichnungen zeigen
- Fig. 1: ein Endstück eines Brauseschlauches im Schnitt mit einem daran befestigten Anschlußnippel und
- Fig. 2: einen Anschlußnippel einer anderen Ausführungsform.

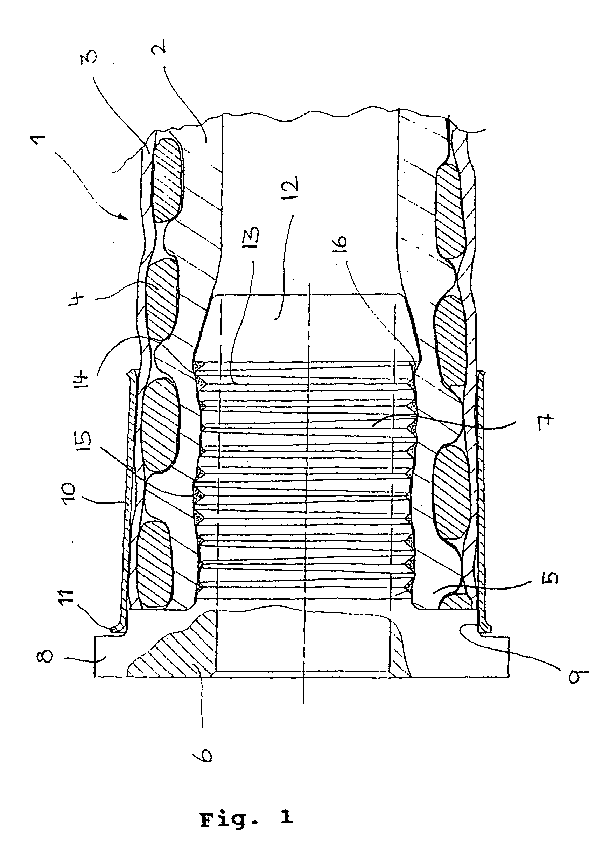

Bei der in Fig. 1 dargestellten Ausführungsform der Erfindung ist ein Brauseschlauch 1 als doppelwandiger Kunststoffschlauch ausgebildet, bei dem zwischen einem Innenschlauch 2 und einem Außenschlauch 3 eine umlaufende flachovale Verstärkungswendel 4 aus Hartplastik, insbesondere hart eingestelltem Polyvinylchlorid, angeordnet ist. Die Wandstärke des Innenschlauches ist größer als die des Außenschlauches. Der Innenschlauch 2 und der Außenschlauch 3 sind flexibel und bestehen insbesondere aus weich eingestelltem Polyvinylchlorid. Die beiden Enden des Brauseschlauches 1, von denen nur ein Ende 5 dargestellt ist, sind mit Anschlußnippeln 6 zum Anschließen an sanitäre Armaturen versehen. Der besseren Übersichtlichkeit wegen ist die üblicherweise vorgesehene Überwurfmutter nicht dargestellt. Der Anschlußnippel 6 weist einen rohrförmigen Abschnitt 7 auf, der in das Schlauchende 5 eingeschoben ist. Am freien Schlauchende 5 geht der rohrförmige Abschnitt 7 in einen Flansch 8 über, dessen Außenumfang zum Angriff eines Drehwerkzeuges als Sechskant ausgebildet ist. Auf der dem rohrförmigen Abschnitt 7 zugewandten Seite weist der Flansch 8 eine kreisringförmige Stufe 9 auf, deren Außendurchmesser so bemessen ist, daß eine auf das Schlauchende 5 und den rohrförmigen Abschnitt 7 aufgeschobene Klemmhülse 10 auf der ringförmigen Stufe 9 zur Anlage kommt und sich auf dieser zentriert. Zur Erleichterung des Aufschiebens ist die Klemmhülse an ihrem dem Flansch 8 zugewandten Rand 11 bogenförmig nach außen aufgeweitet. Die Klemmhülse 10 kann schwach konisch ausgebildet sein.

Der rohrförmige Abschnitt 7 des Anschlußnippels 6 hat eine Länge, die geringer ist als der zweifache Innendurchmesser des Anschlußnippels. An seinem vom Flansch 8 abweisenden Ende weist der rohrförmige Abschnitt 7 eine Einführschräge 12 auf, die das Einführen des rohrförmigen Abschnittes in das Schlauchende 5 erleichtert. Im übrigen ist der rohrförmige Abschnitt im wesentlichen zylindrisch ausgebildet, weist aber an seiner Außenseite eine besondere Struktur auf. Im Bereich zwischen der Einführschräge 12 und dem Flansch 8 besitzt der rohrförmige Abschnitt 7 über eine Länge von ca. 10 mm zehn bis zwölf umlaufende ringförmige Rillen 13, die im Längsschnitt des Nippels spitzwinklig V-förmig ausgebildet sind, wobei die Rillenflanken einen Winkel von ca. 80° zueinander einnehmen. Die Rillen sind in sich ringförmig geschlossen und verlaufen senkrecht zur Längsachse des Nippels. Der Außendurchmesser des rohrförmigen Abschnittes im jeweiligen Rillengrund ist bei allen Rillen derselbe. Die Höhe der Grate 14 zwischen zwei Rillen ist jedoch verschieden. Dies ist dadurch bedingt, daß den Rillen 13 bzw. den dazwischenliegenden Graten 14 ein flaches, wendelförmiges Grobgewinde 15 überlagert ist, dessen Ganghöhe und Steigung denen der Verstärkungswendel 4 entspricht. Durch die Überlagerung mit dem Grobgewinde 15 sind die Grate 14 zwischen den Rillen mehr oder weniger stark abgeflacht, wobei auch schräge Abflachungen vorhanden sind. Der gerillte Abschnitt zwischen Einführschräge 12 und Flansch 8 des Nippels umfaßt etwa 1 1/2 Ganghöhen des Grobgewindes 15. Die maximale Tiefe der Rillen beträgt ca. 0,75 mm. Die Tiefe des Grobgewindes beträgt demgegenüber nur ungefähr 0,5 mm, so daß auch in Bereichen der Rillen, in denen das Grobgewinde eine maximale Abflachung verursacht, noch Vertiefungen der Rillen vorhanden sind.

Der Innenschlauch 2 ist im Bereich des rohrförmigen Abschnittes 7 des Nippels 6 in Längsrichtung gestaucht, wodurch er mindestens einen Teil des Zwischenraumes zwischen zwei Windungen der Verstärkungswendel 4 ausfüllt. Durch diese Stauchung ist das Material des Innenschlauches auch mindestens teilweise in die Vertiefungen der Rillen 13 eingedrückt. Noch vorhandene Zwischenräume zwischen den Vertiefungen der Rillen 13 und dem Innenschlauch 2 sind durch einen hohlraumfüllenden Kleber 16 ausgefüllt, der eine gute Bindung an das Material des Innenschlauches 2 besitzt und dadurch dem Innenschlauch eine Innenverrippung bzw. Innenverzahnung verleiht. Gleichzeitig besitzt der Kleber gute Klebeeigenschaften gegenüber dem Material des Nippels 6, der aus Metall oder aus Kunststoff bestehen kann. Dadurch wird einerseits eine gute Dichtigkeit der Verbindung zwischen Innenschlauch 2 und Nippel 6 erreicht. Gleichzeitig bildet die Verzahnung eine hervorragende mechanische Verankerung des Brauseschlauches auf dem Nippel.

Für die Montage des Nippels 6 am Brauseschlauch wird zunächst eine übliche Überwurfmutter über den Brauseschlauch 1 geführt, wonach die Klemmhülse 10 aufgeschoben wird und zwar über eine Länge, die größer ist als die Länge des rohrförmigen Abschnittes 7 des Nippels 6. Der Kleber 16 wird auf der Außenseite des rohrförmigen Abschnittes 7 des Nippels und/oder auf der Innenseite des Innenschlauches 2 im Bereich des Schlauchendes 5 aufgetragen, wonach der Nippel 8 mit seiner Einführschräge 12 in der Öffnung am Schlauchende angesetzt und durch relative Drehung entsprechend dem Grobgewinde 15 und dem wendelförmigen Verlauf der Verstärkungswendel 4 in das Schlauchende eingedreht wird. Während dieses Eindrehvorganges erfolgt eine Stauchung des Innenschlauches und ein Einpressen des Materials des Innenschlauches in die Rillen 13. Dabei hat der noch nicht ausgehärtete Kleber 16 eine Schmiermittelwirkung. Anschließend wird die Klemmhülse über das Schlauchende 5 geschoben, bis ihr Rand 11 zur Anlage auf der ringförmigen Stufe bzw. Schulter 9 des Flansches 8 kommt. Durch das Aufpressen der Klemmhülse erfolgt eine weitere radiale Verdichtung des Schlauchendes über dem rohrförmigen Abschnitt 7 des Anschlußnippels. Obwohl die Länge des rohrförmigen Abschnittes des Anschlußnippels kleiner ist als der zweifache Innendurchmesser des Anschlußnippels und die Klemmhülse 10 noch kürzer ist, wird eine mechanisch stabile und druckdichte Verbindung zwischen Schlauchende und Nippel erzielt. Längsverstärkungsfäden, die zwischen dem Innenschlauch 2 und der Verstärkungswendel 4 angeordnet sind, verlaufen infolge der Verformung des Innenschlauches im Verbindungsbereich des rohrförmigen Abschnittes wellenförmig und erhalten dadurch eine zugfeste Verankerung.

Der hier beschriebene Brauseschlauch kann mit einem Ende an eine Mischarmatur und mit dem anderen Ende an eine Handbrause angeschlossen werden. Der Anschlußnippel kann aber auch anders ausgebildet sein und beispielsweise in Verlängerung des Flansches ein Anschlußgewinde oder einen rohrförmigen Anschlußstutzen aufweisen, über die er je nach Verwendungszweck auch an andere Armaturenteile anschließbar sein kann.

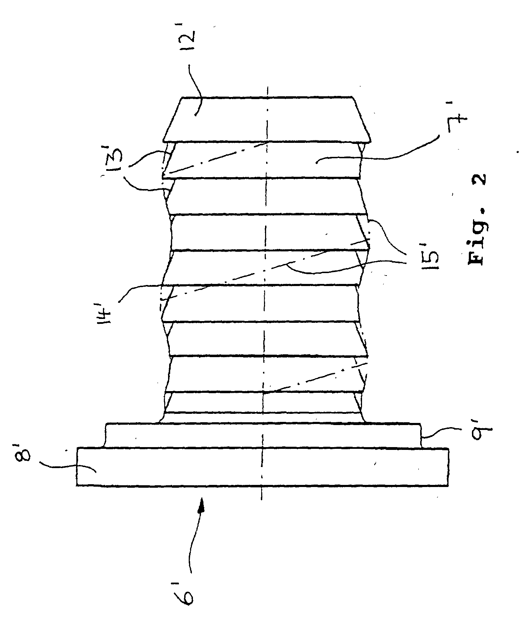

Bei der in Fig. 2 dargestellten Ausführungsform ist der Nippel etwas anders gestaltet als bei der Ausführungsform nach Fig. 1. Im übrigen entsprechen sich die Ausführungsformen, weshalb entsprechende Bezugszahlen verwendet werden und lediglich der Anschlußnippel dargestellt ist. Das Grobgewinde 15' ist zur besseren Übersichtlichkeit gestrichelt gezeichnet, wodurch die Wellenform, die sich den Rillen 13' überlagert, deutlich wird. Im Gegensatz zur Ausführungsform nach Fig. 1 sind die Rillen 13' nicht symmetrisch zur Längsachse des Nippels 6' ausgebildet, sondern verlaufen schräg dazu, so daß sich eine sägezahnartige Rillung ergibt, wobei die Zahnschneiden der Grate 14' zwischen den Rillen 13' in Richtung zum Flansch 8' weisen, d.h. entgegen der Einschubrichtung des Nippels in das Schlauchende. Durch diese Ausbildung wird das Einschieben des Nippels 6' in den Schlauch erleichtert, das ungewollte Abziehen des Schlauches vom Nippel jedoch erschwert. Die sägezahnartige Ausbildung ist vorzugsweise so ausgestaltet, daß eine Flanke der Rillen im wesentlichen senkrecht zur Längsachse des Nippels steht und die andere entsprechend stark zur Längsachse abgeschrägt ist.

## Patentansprüche

1. Rohrförmiger Anschlussnippel (6) zur Befestigung an mindestens einem Ende (5) eines Kunststoffschlauches (1), insbesondere Brauseschlauches, wobei der Nippel (6) an der Außenseite eines in einen mit Verstärkungswendel (4) versehenen Kunststoffschlauch ragenden Rohrabschnittes (7) ein dem wendelförmigen Verlauf der Verstärkungswendel (4) entsprechendes Grobgewinde (15) aufweist,mit welchem Nippel (6) eine das, Schlauchende (5) gegen die Außenseite des Rohrabschnittes (7) drückende äußere Klemmhülse (10) zusammenwizkt, **dadurch gekennzeichnet, daß** auf der Außenseite des Rohrabschnittes (7) des Anschlussnippels (6) eine Vielzahl von Rillen (13) vorgesehen ist, die im wesentlichen quer zur Längsachse des Nippels verlaufen, wobei die Gewindetiefe des Grobgewindes (15) geringer ist als die Tiefe der Rillen (13) und das Grobgewinde (15) den Rillen (13) überlagert ist.

2. Anschlussnippel nach Anspruch 1, **dadurch gekennzeichnet, dass** die Rillen (13) als umlaufende, vorzugsweise in sich geschlossene Rillen ausgebildet sind.

3. Anschlussnippel nach Anspruch 1 oder 2, **dadurch gekennzeichnet, dass** der Außendurchmesser des Rohrabschnittes (7) im jeweiligen Rillengrund, unabhängig vom Grobgewinde (15), jeweils gleich groß ist.

4. Anschlussnippel nach einem der Ansprüche 1 bis 3, **dadurch gekennzeichnet, dass** die Rillen (13) im Längsschnitt des Nippels (6) im wesentlichen V-förmig ausgebildet sind, wobei ihre gegenüberliegende, schräg zueinander verlaufende Flanken vorzugsweise einen Winkel von 50-110°, insbesondere einen spitzen Winkel miteinander bilden.

5. Anschlussnippel nach einem der vorhergehenden Ansprüche, **dadurch gekennzeichnet, dass** der Rohrabschnitt (7), abgesehen von einer etwaigen Einführschräge (12), im wesentlichen zylindrisch ausgebildet ist.

6. Anschlussnippel nach einem der vorhergehenden Ansprüche, **dadurch gekennzeichnet, dass** die axiale Länge des Rohrabschnittes (7) etwa doppelt so groß ist wie der Innendurchmesser des Rohrabschnittes (7).

7. Anschlussnippel nach einem der vorhergehenden Ansprüche, **dadurch gekennzeichnet, dass** die Stirnseite des Nippels (6) als Rohrflansch (8) ausgebildet ist und die dem Rohrabschnitt (7) zugewandte Seite des Flansches (8) eine abgesetzte ringförmige Schulter (9) aufweist, deren Außendurchmesser im wesentlichen dem Innendurchmesser der Klemmhülse (10) entspricht und als zentrierende Abstützung für die Klemmhülse (10) dient.

8. Kunststoffschlauch (1), insbesondere Brauseschlauch, mit Verstärkungswendel (4), **dadurch gekennzeichnet, dass** er an mindestens einem Ende (5) mit einem rohrförmigen Anschlussnippel (6) nach einem der vorhergehenden Ansprüche versehen ist.

9. Schlauch nach Anspruch 8, **dadurch gekennzeichnet, dass** die Schlauchinnenseite im Bereich des Nippels harte Rippen aufweist, die in die Rillen (13) eingreifen.

10. Schlauch nach Anspruch 8 oder 9, **dadurch gekennzeichnet, dass** er als mindestens doppelwandiger Schlauch mit Innenschlauch (2), Außenschlauch (3) und der dazwischenliegenden Wendel (4) ausgebildet ist und dass das Material des Innenschlauches (2) im Bereich der Klemmhülse (10) in Zwischenräume zwischen den Gängen der Wendel (4) eingedrückt ist und diese im wesentlichen ausfüllt, insbesondere mindestens teilweise an der Innenseite des Außenschlauches (3) anliegt.

11. Schlauch nach Anspruch 10, **dadurch gekennzeichnet, dass** die Schlauchinnenseite im Bereich des Nippels (6) mit einem Zwischenräume zwischen Schlauchinnenseite und Außenseite des Rohr abschnittes (7) ausfüllenden ausgehärteten Kleber (16) versehen ist, der eine gute Haftung am Innenschlauch (2) aufweist, wobei der Kleber (16) vorzugsweise Zwischenräume zwischen Innenschlauch (2) und Rillen (13) des Nippels (6) ausfüllt.

12. Schlauch nach Anspruch 10 oder 11, **dadurch gekennzeichnet, dass** er Längsverstärkungsfäden aufweist und diese im Bereich des Nippels (6) entsprechend der Form des Grobgewindes (15) und insbesondere der Form des gestauchten Innenschlauches wellenförmig verlaufen.

## Claims

1. A tubular connection fitting (6) for attaching to at least one end (5) of a plastic tube (1), in particular a shower tube, wherein the fitting (6) provides a coarse screw threading (15) that matches the coil-shaped gradient of the reinforcement coils (4) on the outside of a pipe segment that protrudes into an arranged plastic hose with the reinforcing coils (4), with which fitting (6) connects an outside clamping piece (10) that presses the tube end (5) against the outside of the pipe segment (7), **characterized in that** a number of grooves (13) is provided on the outside of the pipe segment (7) of the connection fitting (6) that run essentially transverse to the longitudinal axis of the fitting, wherein the threading depth of the coarse screw threading (15) is less than the depth of the grooves (13) and the coarse screw threading (15) overlays the grooves (13).

2. A connection fitting according to claim 1, **characterized in that** the grooves (13) are formed as revolving grooves that are preferably round.

3. A connection fitting according to claims 1 or 2, **characterized in that** the outer diameter of the pipe segment (7) is respectively the same size at the respective groove base, regardless of the coarse screw threading (15).

4. A connection fitting according to claims 1 through 3, **characterized in that** the grooves (13) in the longitudinal section of the fitting (6) are designed essentially V-shaped, wherein their opposing flanks, which run transverse to each other, preferably form an angle of 50-110°, in particular an acute angle, with each other.

5. A connection fitting according to one of the previous claims, **characterized in that** the pipe segment (7), with the exception of somewhat of an insert bevel (12), is designed essentially cylindrical.

6. A connection fitting according to one of the previous claims, **characterized in that** the axial length of the pipe segment (7) is approximately twice as large as the inner diameter of the pipe segment (7).

7. A connection fitting according to one of the previous claims, **characterized in that** the face side of the fitting (6) is designed as a pipe flange (8) and the side of the flange (8) facing the pipe segment (7) has an offset circular shoulder (9), the outer diameter of which is essentially equivalent to the inner diameter of the clamping piece (10) and serves as a centering prop for the clamping piece (10).

8. A plastic tube (1), in particular a shower tube, with reinforcing coils (4), **characterized in that** it is provided on at least one end (5) with a tubular connection fitting (6) according to one of the previous claims.

9. A tube according to claim 8, **characterized in that** the inside of the tube provides solid ribs in the area of the fitting that mesh into the grooves (13).

10. A tube according to claims 8 or 9, **characterized in that** it is designed as an at least double walled tube with an inner tube (2), an outer tube (3) and the interposed coil (4) and that the material of the inner tube (2) is pressed in the area of the clamping piece (10) into spaces between the workings of the coils (4) and essentially fills them in, in particular at least partially contacts the inner side of the outer tube (3).

11. A tube according to claim 10, **characterized in that** the inner side of the tube in the area of the fitting (6) is provided with a hardened adhesive (16) that fills in the spaces between the inside of the tube and the outside of the pipe segment (7) that provides good adhesion to the inner tube (2), wherein the adhesive (16) preferably fills in spaces between the inner tube (2) and grooves (13) of the fitting (6).

12. A tube according to claims 10 or 11, **characterized in that** it has lengthwise reinforcement threads and these extend forming waves corresponding to the contour of the coarse screw threading (15) and in particular the contour of the compressed inner tube in the area of the fitting (6).

## Revendications

1. Manchon de raccordement tubulaire (6) pour la fixation sur au moins une extrémité (5) d'un tuyau plastique (1), plus particulièrement d'un tuyau de douche, ledit manchon de raccordement (6) présentant à l'extérieur d'un segment tubulaire (7) lequel pénètre dans le tuyau plastique pourvu d'une spirale de renfort (4), un filetage à pas grossier (15) correspondant au pas de l'hélice de la spirale de renfort (4), par lequel raccordement (6) coopère une douille de serrage (10) pressant l'extrémité (5) du tuyau contre l'extérieur du segment tubulaire (7), **caractérisé par le fait que** sur la face extérieure du segment tubulaire (7) du manchon de raccordement (6) est prévue une multitude de rainures (13) pour l'essentiel perpendiculaire à l'axe longitudinal du manchon, la profondeur du filetage à pas grossier (15) étant inférieure à la profondeur des rainures (13) et le filetage à pas grossier (15) étant superposé aux rainures (13).

2. Manchon de raccordement selon la revendication 1, **caractérisé par le fait que** les rainures (13) forment des rainures circulaires, de préférence fermées.

3. Manchon de raccordement selon la revendication 1 ou 2, **caractérisé par le fait que** le diamètre extérieur du segment tubulaire (7) est identique au fond de chacune des rainures, indépendamment du filetage à pas grossier (15).

4. Manchon de raccordement selon une des revendications 1 à 3, **caractérisé par le fait que** les rainures (13) vues en coupe longitudinale du manchon (6) se présentent essentiellement en forme de V, leurs flancs opposés inclinés les uns par rapport aux autres formant ensemble de préférence un angle de 50 à 110°, plus particulièrement un angle pointu.

5. Manchon de raccordement selon une des revendications précédentes, **caractérisé par le fait que** le segment tubulaire (7) est pour l'essentiel cylindrique, à l'exception d'un éventuel chanfrein d'engagement (12).

6. Manchon de raccordement selon une des revendications précédentes, **caractérisé par le fait que** la longueur axiale du segment tubulaire (7) correspond approximativement au diamètre intérieur du segment tubulaire (7) multiplié par deux.

7. Manchon de raccordement selon une des revendications précédentes, **caractérisé par le fait que** la face avant du manchon (6) forme une bride de tuyau (8) et que la face de la bride (8) jouxtant le segment tubulaire (7) présente un épaulement circulaire (9), dont le diamètre extérieur correspond pour l'essentiel au diamètre intérieur de la douille de serrage (10) et sert d'appui de centrage pour la douille de serrage (10).

8. Tuyau plastique (1), plus particulièrement tuyau de douche, avec spirale de renfort (4), **caractérisé par le fait qu'**il est pourvu sur au moins une extrémité (5) d'un manchon de raccordement tubulaire (6) selon une des revendications précédentes.

9. Tuyau selon la revendication 8, **caractérisé par le fait que** l'intérieur du tuyau présente, dans la zone du manchon, des nervures rigides qui s'engagent dans les rainures (13).

10. Tuyau selon la revendication 8 ou 9, **caractérisé par le fait qu'**il forme au moins un tuyau à double paroi avec tuyau intérieur (2), tuyau extérieur (3) et spirale (4) intercalée entre les deux, et que le matériau du tuyau intérieur (2) dans la zone de la douille de serrage (10) est enfoncé dans les espaces entre les filets de la spirale (4) en remplissant ceux-ci pour l'essentiel, et plus particulièrement entre en contact au moins partiellement avec la face intérieure du tuyau extérieur (3).

11. Tuyau selon la revendication 10, **caractérisé par le fait que** la face intérieure du tuyau est enduite, dans la zone du manchon (6), d'une colle durcie (16) remplissant les espaces entre la face intérieure du tuyau et la face extérieure du segment tubulaire (7) et adhérant bien au tuyau intérieur (2), où la colle (16) remplit de préférence les espaces entre le tuyau intérieur (2) et les rainures (13) du manchon (6).

12. Tuyau selon la revendication 10 ou 11, **caractérisé par le fait qu'**il présente des fils de renfort longitudinaux et que ceux-ci prennent une forme ondulée correspondant, dans la zone du manchon (6), à la forme du filetage à pas grossier (15) et plus particulièrement à la forme du tuyau intérieur plissé.
